# FASCICULE DE BREVET EUROPEEN

(11) **EP 1 181 479 B1**
(45) Date de publication et mention de la délivrance du brevet: **24.08.2005**
(21) Numéro de dépôt: 00940469.0
(22) Date de dépôt: 08.06.2000
(51) Int. Cl.: F16L 33/02

(54) **COLLIER DE SERRAGE**
SCHELLE
CLAMPING RING

(30) Priorité: 08.06.1999 FR 9907225
(43) Date de publication de la demande: 27.02.2002
(73) Titulaire: Etablissements CAILLAU, 92130 Issy-les-Moulineaux (FR)
(72) Inventeur: DETABLE, Pascal, 41130 Gièvres (FR); VIRATELLE, Henri, 89250 Mont Saint Sulpice (FR); ANDRE, Michel, 41200 Romorantin-Lanthenay (FR)
(74) Mandataire: Intes, Didier Gérard André
(86) Numéro de dépôt international: PCT/FR2000/001583
(87) Numéro de publication internationale: WO 2000/075552

(56) Documents cités:
- EP-A- 0 454 661
- CH-A- 679 178
- DE-C- 19 750 010
- FR-A- 2 683 869
- GB-A- 2 235 948
- US-A- 4 674 720
- US-A- 4 742 600

## Description

La présente invention concerne un collier de serrage réalisé à partir d'une bande enroulée sur elle-même, comprenant un premier moyen d'accrochage, formé par un crochet qui est formé en saillie vers l'extérieur du collier et qui équipe une première extrémité de la bande, tandis qu'un deuxième moyen d'accrochage équipe la deuxième extrémité de la bande, ce deuxième moyen d'accrochage comprenant un élément de retenue, qui est en saillie vers l'extérieur du collier et qui est susceptible d'être engagé sous le crochet pour fermer le collier.

On connaît déjà, par exemple par la demande de brevet européen n° 3 192, des colliers de serrage, formés à partir d'une bande enroulée sur elle-même et susceptibles d'être accrochés et serrés par engagement d'un crochet sur une oreille saillante, par exemple formée par un double pli radial.

Le moyen d'accrochage de ce type de collier présente l'avantage d'être simple à fabriquer et à mettre en oeuvre. Dans certains cas, on peut souhaiter réaliser les colliers réutilisables, auquel cas il doit être possible de décrocher les moyens d'accrochage pour ouvrir le collier, le remettre en place sur un objet à serrer et le refermer. Toutefois, dans d'autres cas, on considère que les colliers ne doivent pas pouvoir être réutilisés. Par exemple, lorsque le collier sert à serrer un tuyau sur un embout dans lequel circule un fluide, on peut souhaiter éviter que cette connexion ne puisse être démontée, au risque d'être mal remontée. Un tel risque n'est pas admissible dans certaines applications, par exemple les raccords de gaz, dans lesquelles une sécurité maximale est exigée. De plus, il est souhaitable d'éviter tout décrochage intempestif du collier.

La demande de brevet DE 39 06 636 montre un collier dont la première extrémité présente une fente, tandis que la deuxième extrémité présente un élément de retenue formé par une languette faisant radialement saillie vers l'extérieur. A l'état serré du collier, cette languette vient s'accrocher dans la fente. Toutefois, dans cette situation, la languette n'est aucunement protégée et elle peut être repoussée vers l'intérieur pour permettre le décrochage du collier.

Selon un premier mode de réalisation, l'invention a pour but de proposer un collier du type précité, utilisant un premier moyen d'accrochage formé par un crochet et un deuxième moyen d'accrochage comprenant un élément de retenue susceptible d'être engagé sous le crochet pour fermer le collier, dans lequel le décrochage soit rendu impossible ou bien tout au moins, extrêmement difficile.

Ce but est atteint grâce au fait que, dans le collier selon l'invention, le crochet présente un bord libre s'étendant sensiblement selon la surface d'un cylindre défini par la bande enroulée sur elle-même, tandis que le deuxième moyen d'accrochage comprend, en outre, un rebord formé, en saillie radiale vers l'extérieur du collier, au voisinage de l'élément de retenue, le bord libre du crochet étant susceptible d'être engagé sous ce rebord alors que l'élément de retenue est engagé sous ledit crochet pour fermer le collier.

Grâce à cette disposition, le bord libre du crochet est « protégé » par le rebord en saillie, de sorte qu'il n'est pas possible de se saisir de ce bord libre avec un outil pour tenter d'ouvrir le collier. De plus, la liaison d'accrochage est parfaitement assurée puisque le crochet est maintenu en position rabattue contre la bande qui porte le deuxième moyen d'accrochage (ce qui garantit l'efficacité de la coopération entre ce crochet et l'élément de retenue) par l'engagement du bord libre du crochet sous le rebord.

Dans le collier selon l'invention, l'élément de retenue du deuxième moyen d'accrochage équipe le brin de bande intérieur, tandis que le crochet du premier moyen d'accrochage équipe le brin de bande extérieur. Ceci signifie qu'à l'état fermé du collier, le crochet coiffe l'élément de retenue et que la première extrémité de la bande qui porte ce crochet se trouve radialement au-dessus de la deuxième extrémité de la bande. Par conséquent, le crochet en lui-même protège l'élément de retenue qui ne peut pas être saisi avec un outil pour décrocher le collier. Il faut noter que l'efficacité de l'accrochage est également lié au fait que l'élément de retenue, par la réaction de l'objet serré par le collier, a tendance à dépasser radialement pour venir coopérer avec le crochet.

Ainsi, le crochet et l'élément de retenue, qui sont tous deux en saillie radiale vers l'extérieur du collier par rapport à la surface du cylindre défini par la bande, sont tous deux "protégés" contre une manipulation visant à tenter d'ouvrir le collier après son serrage. La direction vers l'extérieur est celle qui tend à s'éloigner de l'axe géométrique du cylindre formé par la bande enroulée.

Avantageusement, le crochet présente une largeur, mesurée dans la direction axiale du cylindre formé par la bande enroulée sur elle-même, qui est inférieure à la largeur de la bande, mesurée dans la même direction.

Dans ce cas, il est avantageux que le rebord appartenant au deuxième moyen d'accrochage présente des branches latérales, s'étendant sensiblement selon la longueur de la bande, entre lesquelles ledit crochet est susceptible d'être engagé en position fermée du collier.

Grâce à cette disposition, non seulement le bord libre, mais également les bords latéraux du crochet sont « protégés » par le rebord. Il faut également noter que les branches latérales du rebord permettent un guidage du déplacement du brin de bande extérieur par rapport au brin de bande intérieur lors de l'accrochage et garantissent donc que l'accrochage se fait précisément dans la position souhaitée du crochet par rapport à l'élément de retenue.

Selon une variante particulièrement avantageuse, la deuxième extrémité de la bande présente une découpe laissant subsister une languette qui constitue l'élément de retenue, une partie de bord de ladite découpe, disposée en regard de cette languette, étant repoussée sensiblement radialement vers l'extérieur du collier et formant ainsi ledit rebord.

Dans ce cas, l'élément de retenue et le rebord du deuxième moyen d'accrochage sont réalisés de manière très simple puisqu'une opération d'estampage ou de poinçonnage permet à la fois de découper la languette et de repousser la zone de contour de la découpe pour former le rebord.

Il est également avantageux que le crochet soit formé par un bossage pratiqué à la première extrémité de la bande, bossage dont une partie du pourtour, préservée sensiblement dans le plan de la bande, forme ledit bord libre du crochet.

Dans ce cas, le crochet en lui-même est réalisé par une simple opération d'estampage formant ce bossage. Ce faisant, la partie de bande adjacente à la zone dans laquelle le bossage doit être formé peut être maintenue dans le plan de la bande, ce qui assure la réalisation du bord libre du crochet devant être engagé sous le rebord.

Il faut noter que cette variante est également compatible avec le fait d'obtenir un crochet dont la largeur est inférieure à la largeur de la bande. Le bord libre du crochet peut être délimité par une découpe pratiquée dans la bande.

Dans le collier de serrage que divulgue la demande de brevet européen n° 3 192, le crochet est formé par des pliages successifs dans la première extrémité de la bande. Ce système s'est avéré tout à fait satisfaisant et il a été fabriqué à des millions d'exemplaires. Toutefois, les opérations de pliage nécessaires à la réalisation de ce crochet nécessitent plusieurs étapes successives de passage dans différents outils de pliage. De plus, les angles de pliage sont très prononcés et il arrive que des fissures ou des zones de fragilité excessive apparaissent dans les plis.

Selon un deuxième mode de réalisation, l'invention a donc pour objet de perfectionner le collier de la demande de brevet européen n° 3 192 pour surmonter ces difficultés.

Ainsi, l'invention s'applique à un collier de serrage réalisé à partir d'une bande enroulée sur elle-même, comprenant un premier moyen d'accrochage, formé par un crochet, équipant une première extrémité de la bande, tandis qu'un deuxième moyen d'accrochage équipe la deuxième extrémité de la bande, ce deuxième moyen d'accrochage comprenant un élément de retenue, faisant sensiblement radialement saillie par rapport à la bande et susceptible d'être engagé sous le crochet pour fermer le collier.

Selon l'invention, le crochet est formé par un bossage, qui est pratiqué à la première extrémité de la bande et dont la largeur, mesurée dans la direction axiale du cylindre formé par la bande enroulée sur elle-même, est inférieure à la largeur de la bande, mesurée dans la même direction et en ce que la largeur de l'élément de retenue, mesurée dans la même direction, est tout au plus égale à la largeur de la face interne du crochet.

Le bossage peut être réalisé de manière très simple par emboutissage, par exemple en seulement une ou deux passes d'un outil d'emboutissage. Par exemple, la première passe permet former un « bossage primaire » sensiblement semi-sphérique, tandis que la deuxième passe donne sa forme définitive au crochet. Le crochet ainsi obtenu est extrêmement résistant et les risques de malfaçon sont considérablement réduits. De plus, le crochet est rigide et ne risque pas de se déformer après l'accrochage.

Avantageusement, l'élément de retenue présente une largeur qui est sensiblement égale à la largeur de la face interne du crochet.

Le bossage formant le crochet présente des joues s'étendant sensiblement selon la longueur de la bande et, lors de son accrochage sur l'élément de retenue, ce crochet est parfaitement calé dans la direction axiale du cylindre formé par l'enroulement de la bande, ce qui permet d'éviter les risques de décrochage par torsion de la bande et déplacement du crochet par rapport à l'élément de retenue dans cette direction axiale.

Avantageusement, la deuxième extrémité de la bande présente une découpe laissant subsister une languette qui constitue l'élément de retenue.

Dans ce cas, l'élément de retenue est réalisé de manière très simple, également en une seule passe d'outil, voire en deux passes.

Selon une disposition avantageuse, un espace est ménagé entre la languette et le bord de ladite découpe, cet espace étant susceptible de recevoir au moins une partie du bord libre du crochet. Cet espace peut être ménagé sous le rebord précédemment évoqué ou, tout simplement, par un dégagement dû à la distance obtenue entre le bord libre de la languette et le bord de la découpe, dans le plan de la bande.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 montre, en vue de dessus (selon la flèche F de la figure 2) la région des extrémités de la bande qui forme le collier selon un premier mode de réalisation, extrémités qui portent les moyens d'accrochage ;
- la figure 2 est une vue en coupe selon une ligne longitudinale de la bande indiquée par II-II sur la figure 1, la figure 2 montrant le collier à l'état ouvert ;
- la figure 3 est une vue analogue à la figure 2, sur laquelle le collier est cette fois représenté à l'état fermé ;
- la figure 4 est une vue analogue à la figure 1, pour un deuxième mode de réalisation ;
- la figure 5 est une vue en coupe selon la ligne V-V de la figure 4 ;
- la figure 6 est une vue extérieure d'un collier selon une variante ; et
- les figures 7 et 8 sont des coupes, respectivement selon les lignes VII-VII et VIII-VIII de la figure 6.

Le collier de l'invention est en particulier réalisé à partir d'une bande métallique, par exemple en acier de type couramment utilisé pour réaliser un collier de serrage.

Le collier représenté sur les figures est donc réalisé à partir d'une bande 10 enroulée sur elle-même entre une première extrémité 10A et une deuxième extrémité 10B.

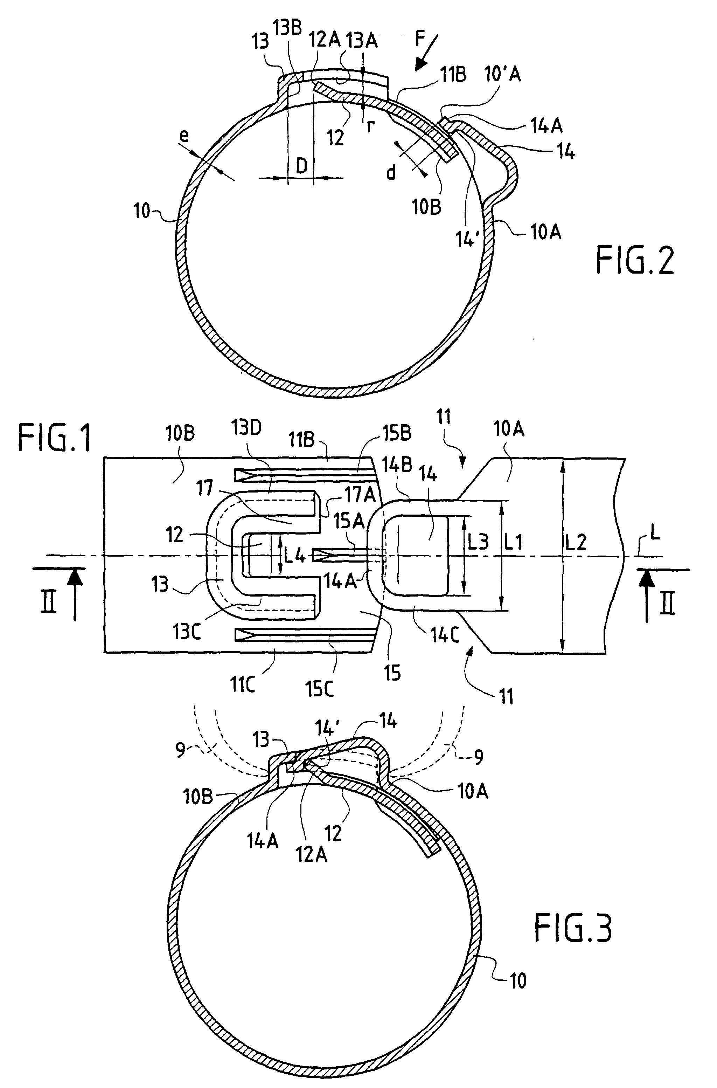

La deuxième extrémité 10B porte un deuxième moyen d'accrochage qui comprend un élément de retenue formé par une languette 12 qui, comme on le voit sur les figures 2 et 3, est en légère saillie radiale vers l'extérieur du collier (dans le sens centrifuge). Ce deuxième moyen d'accrochage comprend également un rebord 13 formé au voisinage de cette languette. Ce rebord 13 étant également en saillie radiale par rapport à la bande qui forme le collier.

On désigne par la référence 13A la face intérieure du rebord, c'est-à-dire la face qui est tournée vers le centre du collier. Elle se trouve à la distance radiale r par rapport au cylindre formé par la bande 10. Cette distance radiale r est au moins sensiblement égale à l'épaisseur e de la bande. De préférence, la distance r est comprise entre 1,2.e et 2,5.e.

La première extrémité 10A de la bande porte un crochet 14. Comme on le voit sur la figure 3, à l'état fermé du collier, le crochet vient coiffer l'élément de retenue formé par la languette 12 et cette dernière est engagée sous le crochet de telle sorte que son bord libre 12A se bloque contre le bord interne avant 14' (situé du côté de l'extrémité libre de l'extrémité 10A de la bande) du crochet 14.

Ce crochet est formé en saillie radiale par rapport à la bande 10. On voit toutefois qu'il présente un bord libre 14A qui s'étend sensiblement dans le "plan" de la bande 10, c'est-à-dire qu'il s'étend sensiblement selon la surface du cylindre défini par la bande enroulée sur elle-même. En d'autres termes, ce bord libre 14 n'est pas en saillie radiale par rapport à la bande.

On mesure la distance d, dans le sens longitudinal de la bande, entre l'extrémité libre 10'A de la première extrémité 10A de la bande sur laquelle se trouve le bord libre 14A et le bord interne 14' du crochet avec lequel coopère la languette 12. On mesure la distance D, toujours dans le sens longitudinal de la bande, entre l'extrémité libre 12A de la languette 12 et la paroi sensiblement radiale 13B qui délimite le rebord 13 en regard de cette extrémité 12A. La distance D est au moins sensiblement égale à la distance d et, de préférence, légèrement supérieure à cette dernière.

De ce fait, et compte tenu également du fait que la distance r précédemment évoquée est au moins sensiblement égale à l'épaisseur e de la bande, le bord libre du crochet peut être engagé sous le rebord 13 à l'état fermé du collier, c'est-à-dire alors que l'extrémité libre 12A de la languette coopère avec le bord interne de ce crochet. C'est cette situation que l'on voit sur la figure 3, sur laquelle le bord libre 14A du crochet est « coincé » entre l'extrémité 12A de la languette 12 et le rebord 13. Le bord libre du crochet est ainsi protégé et ne peut pas être saisi par un outil pour desserrer le collier. II faut noter que, de plus, l'accrochage est parfaitement réussi puisque le rebord 13 tend à éviter que le crochet ne puisse être repoussé radialement vers l'extérieur, alors que, par la réaction de l'objet serré, la languette tend à être repoussée radialement vers l'extérieur pour venir parfaitement s'accrocher sous le crochet.

Le serrage et l'accrochage du collier peuvent être réalisés à l'aide d'une pince dont les mâchoires 9, indiquées en trait interrompu sur la figure 3, prennent respectivement appui derrière le crochet 14 et derrière le rebord 13.

On voit sur la figure 2 que la portion d'extrémité libre de l'extrémité 10A qui porte le crochet présente une largeur L1 qui est inférieure à la largeur courante L2 de la bande. Ces largeurs sont mesurées dans la direction axiale du cylindre formé par la bande enroulée sur elle-même.

En effet, la portion d'extrémité dans laquelle est formé le crochet est délimitée entre des découpes 11. Dans l'exemple avantageux représenté, ces découpes sont symétriques et le crochet est centré sur l'axe longitudinal L de la bande.

Le crochet est formé par un bossage qui préserve, sur son contour correspondant au bord libre de la bande, une marge non déformée, qui se trouve donc sur le cylindre défini par la bande enroulée sur elle-même. Cette marge comprend le bord libre 14A précédemment évoqué, ainsi que les bords libres latéraux 14B et 14C qui s'étendent selon la longueur de la bande, tandis que le bord libre 14A est transversal. La largeur L3 du crochet proprement dit est donc elle-même inférieure à la largeur L1 précédemment évoquée.

Le rebord 13 présente, quant à lui, des branches latérales, respectivement désignées par les références 13C et 13D. Ainsi, vu de dessus comme sur la figure 1, le rebord 13 présente une forme en U, dont les branches sont dirigées vers l'extrémité libre de la deuxième extrémité 10B de la bande. On comprend que, à l'état accroché du collier, le crochet 14 vient s'insérer entre ces branches. Le crochet est donc d'autant mieux protégé vis-à-vis des tentatives d'ouverture du collier après sa fermeture.

Les portions latérales 14B et 14C du pourtour du crochet viennent respectivement s'insérer sous les branches 13D et 13C du rebord 13. Ainsi, toute la partie du pourtour du crochet 14 située sur l'extrémité libre de la portion d'extrémité 10A de la bande se trouve logée sous le rebord.

Comme on le voit sur les figures, la deuxième extrémité 10B de la bande présente une découpe 17 qui laisse subsister, dans une région médiane de la largeur de la bande, la languette 12. Cette découpe présente sensiblement une forme en U, dont les branches sont tournées vers l'extrémité libre de la portion d'extrémité 10B de la bande, les extrémités de ces branches étant prolongées sensiblement transversalement par des portions transversales 17A de la découpe.

Ainsi, une partie de bord de la découpe 17 qui est disposée en regard de la languette 12, sur ses trois côtés libres, peut être repoussée sensiblement radialement vers l'extérieur du collier tout en présentant une portion en surplomb, sensiblement parallèle au plan de la bande, sous laquelle viendra se loger le bord libre du crochet.

Ce faisant, la languette peut rester quant à elle sensiblement disposée dans le plan de la bande. Pour favoriser l'effet d'accrochage, on pourra toutefois choisir de légèrement repousser radialement vers l'extérieur au moins la portion d'extrémité 12A de la languette. L'extrémité libre de la languette est tournée du côté opposé à l'extrémité libre de la portion d'extrémité 10B de la bande.

Cette portion d'extrémité 10B présente une bavette 15 qui s'étend, à l'état fermé du collier, sous la première portion d'extrémité 10A de cette bande. Cette bavette est disposée entre la languette 12 et l'extrémité libre de la portion d'extrémité 10B de la bande. Elle se trouve d'ailleurs déjà partiellement insérée sous le crochet à l'état ouvert du collier.

Avantageusement, bien que ceci ne soit pas représenté, la bavette 15 et la région d'extrémité 10A de la bande qui porte le crochet (brin extérieur de la bande) peuvent être équipées de manière à compenser l'épaisseur de la languette sous le brin de bande extérieur pour permettre une continuité de l'appui de la bande formant le collier sur l'objet à serrer. Par exemple, ces moyens peuvent être du type décrit dans la demande EP 0 243 224.

La bande du collier de l'invention comporte avantageusement des moyens de rigidification locale. Dans l'exemple représenté sur les figures, ces moyens équipent la région d'extrémité 10B du collier et, en particulier, la bavette 15. Ils comprennent une rainure centrale 15A disposée entre la languette 12 et l'extrémité libre de la portion d'extrémité 10B de la bande, ainsi que deux rainures 15B et 15C disposées de part et d'autre du rebord 13. Bien entendu, ces rainures qui dans l'exemple représenté sont formées en creux à partir de la face extérieure du collier peuvent également être formées en creux à partir de la face intérieure.

Comme on l'a vu précédemment, selon la variante préférentielle, les moyens d'accrochage qui comprennent le crochet, la languette 12 (dont la largeur est L4) et le rebord s'étendent sur une partie seulement de la largeur de la bande et se trouvent sensiblement dans une région centrale de cette largeur. Pour fabriquer le collier, on travaille à partir d'une bande plate dans laquelle, par les découpes 11 et un estampage, on forme le crochet 14 et dans laquelle, par la découpe 17 et une déformation, on forme la languette 12 et le rebord 13. Une fois ces moyens d'accrochage réalisés, il subsiste, sur chacun des bords longitudinaux 11 B et 11C de la bande, des portions marginales parfaitement planes. Il en résulte que l'opération subséquente d'enroulement de la bande sur elle-même peut être réalisée de manière très simple en réalisant le « roulage » sur ces portions marginales.

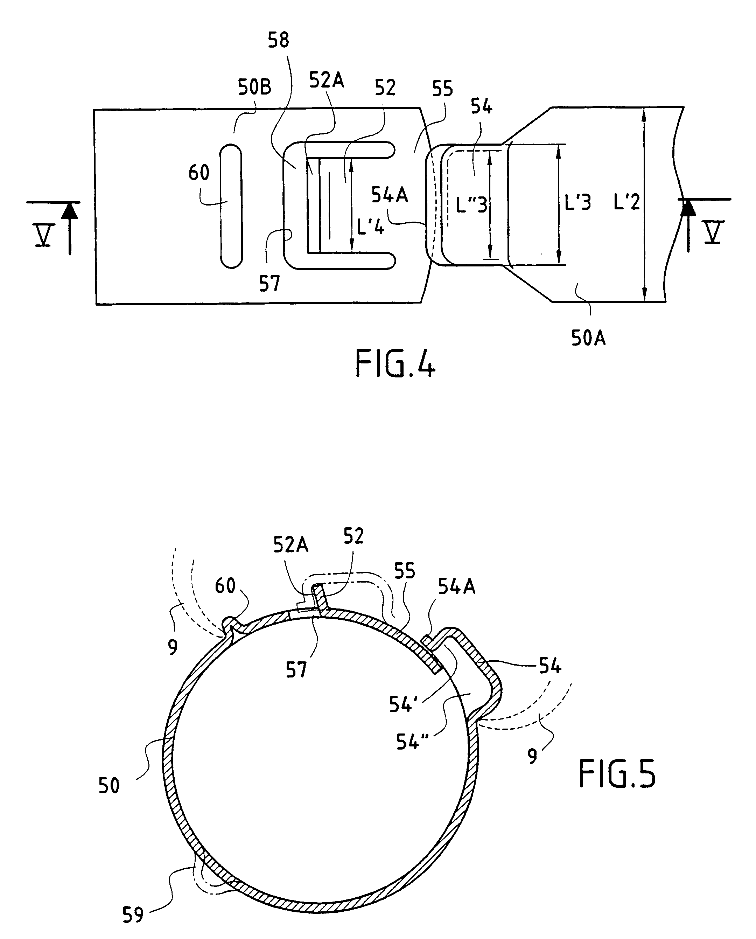

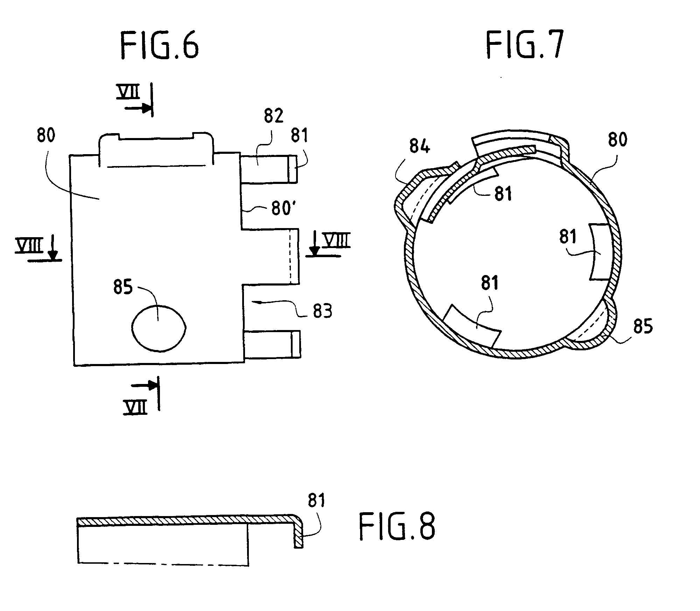

En référence aux figures 4 et 5, on décrit maintenant le deuxième mode de réalisation de l'invention.

Le collier représenté sur ces figures est obtenu par enroulement d'une bande 50, de préférence en métal du type couramment utilisé pour réaliser des colliers de serrage.

La première extrémité 50A de cette bande porte un crochet 54 réalisé par un bossage. Dans l'exemple avantageux représenté, le bord libre du crochet 54A se trouve sensiblement dans le plan de la bande. Le crochet 54 peut être analogue au crochet 14 du premier mode de réalisation et présenter des bordures analogues aux bordures 14B et 14C.

L'élément de retenue, qui équipe la deuxième extrémité 50B de la bande et avec lequel coopère ce crochet pour assurer la fermeture du collier est, dans l'exemple représenté, constitué par une languette 52 globalement analogue à la languette 12 du premier mode de réalisation. Elle présente ainsi avantageusement une extrémité libre 52A recourbée vers l'extérieur du collier.

La languette est formée à partir d'une découpe sensiblement en U pratiquée dans la bande, les branches du U étant dirigées vers l'extrémité libre de la portion d'extrémité 50B de la bande. Dans l'exemple représenté, un espace 58 est ménagé entre le contour de la languette 52 et le contour de l'ouverture 57. II peut être obtenu par enlèvement de matière ou, au moins à l'extrémité libre de la languette 52, par le repli 52A de cette dernière. Comme on le voit sur la figure 5, cet espace 58 peut servir à loger au moins partiellement l'extrémité libre du crochet, voire également les extrémités des joues 54" de ce dernier.

La largeur L'3 (mesurée sur la face externe du collier) du crochet 54 est inférieure à la largeur L'2 de la bande, par des découpes analogues aux découpes 11 de la figure 1. La largeur « interne » L"3 du crochet est sensiblement égale à la largeur L'4 de la languette 52.

On a indiqué en trait mixte sur la figure 5 la position d'accrochage du crochet et l'on voit que son bord interne 54' coopère avec l'élément de retenue 52.

Comme on le voit également sur cette figure 5, le collier peut être serré par venue en prise des mâchoires 9 d'une pince avec, d'une part, l'arrière du crochet et, d'autre part, un bossage, une ondulation ou analogue 60.

Bien entendu, ce deuxième mode de réalisation est compatible avec la présence du rebord 13 du premier mode de réalisation.

La bavette 55 des figures 4 et 5 est analogue à la bavette 15 et, comme cette dernière, elle peut être pourvue de rainures de rigidification ou analogues.

Les deux modes de réalisation sont compatibles avec la présence, sur la bande, d'une ou plusieurs ondulations analogues à l'ondulation 59 représentée en trait mixte interrompu sur la figure 5 et servant à assurer le maintien du serrage malgré les éventuelles fluctuations du diamètre de l'objet à serrer, par exemple du fait de variations de température.

En référence aux figures 6 à 8, on décrit maintenant une variante susceptible d'être appliquée à l'un ou l'autre des deux modes de réalisation qui viennent d'être décrits.

En effet, le collier réalisé à partir de la bande 80 est analogue à ceux des figures précédentes à ceci près qu'il comporte, en outre, des moyens pour le caler axialement par rapport à l'objet à serrer.

Un tel calage axial permet de positionner le collier avec précision par rapport à l'objet à serrer, par exemple pour assurer un serrage parfaitement étanche d'un tuyau sur un embout.

Avantageusement, le collier comporte au moins une patte de calage formée par un élément de paroi radiale s'étendant vers l'intérieur par rapport à la surface du cylindre défini par la bande enroulée sur elle-même.

En l'espèce, le collier comporte plusieurs pattes de calage 81 (par exemple trois), réparties sur sa circonférence. Elles ont la forme de secteurs angulaires d'une jupe annulaire discontinue. Ces pattes de calage espacées les unes des autres ne gênent aucunement la réduction de diamètre du collier nécessaire à son serrage.

Les pattes de calage sont destinées à coopérer avec une zone de l'objet à serrer (tuyau) ou avec une zone du support de cet objet (embout sur lequel est emmanché le tuyau) qui est adaptée à cet effet.

II peut par exemple s'agir de renfoncements formés sur la surface de l'objet à serrer ou de son support. Dans de nombreuses applications, il s'agira plutôt d'un bord d'extrémité axiale ou d'un épaulement (formé sur le support de l'objet à serrer) quelque peu éloigné de la zone de serrage proprement dite.

Pour cela, la ou les pattes de calage sont avantageusement situées sur un bord du collier formé par un bord longitudinal 80' de la bande.

Comme dans l'exemple représenté, les pattes de calage peuvent même être reliées à ce bord par des pattes d'entretoisement 82 s'étendant, parallèlement à l'axe du collier, selon le cylindre formé par la bande enroulée.

Cette variante est simplement réalisée à l'aide de découpes latérales 83 pratiquées sur un bord de la bande, qui laissent subsister des pattes dont le bord libre est replié pour former les pattes de calage 81.

On remarque encore sur les figures 6 et 7 que le collier comporte un bossage 85 éloigné du crochet 84. Ce bossage forme un repère qui facilite le positionnement angulaire du collier sur l'objet à serrer.

Le calage axial peut être réalisé par d'autres moyens que les pattes précédemment évoquées, par exemple par un rebord annulaire continu ou pratiquement continu, réalisé sur la périphérie du collier.

## Revendications

1. Collier de serrage, réalisé à partir d'une bande (10) enroulée sur elle-même et comprenant un premier moyen d'accrochage, formé par un crochet (14), qui est formé en saillie vers l'extérieur du collier et qui équipe une première extrémité (10A) de la bande, tandis qu'un deuxième moyen d'accrochage équipe la deuxième extrémité (10B) de la bande, ce deuxième moyen d'accrochage comprenant un élément de retenue (12), qui est en saillie vers l'extérieur du collier et qui est susceptible d'être engagé sous le crochet (14) pour fermer le collier,
**caractérisé en ce que** le crochet (14) présente un bord libre (14A) s'étendant sensiblement selon la surface d'un cylindre défini par la bande enroulée sur elle-même, tandis que le deuxième moyen d'accrochage comprend, en outre, un rebord (13) formé, en saillie radiale vers l'extérieur du collier, au voisinage de l'élément de retenue (12), le bord libre (14A) du crochet étant susceptible d'être engagé sous ce rebord (13) alors que l'élément de retenue est engagé sous ledit crochet pour fermer le collier.

2. Collier selon la revendication 1, **caractérisé en ce que** le crochet (14) présente une largeur (L3), mesurée dans la direction axiale du cylindre formé par la bande enroulée sur elle-même, qui est inférieure à la largeur (L2) de la bande (10), mesurée dans la même direction.

3. Collier selon la revendication 2, **caractérisé en ce que** le rebord (13) appartenant au deuxi'ème moyen d'accrochage présente des branches (13C, 13D) latérales, s'étendant sensiblement selon la longueur de la bande, entre lesquelles ledit crochet (14) est susceptible d'être engagé en position fermée du collier.

4. Collier selon l'une quelconque des revendications 1 à 3, **caractérisé en ce que** la deuxième extrémité (10B) de la bande (10) présente une découpe (17) laissant subsister une languette (12) qui constitue l'élément de retenue, une partie de bord de ladite découpe, disposée en regard de cette languette, étant repoussée sensiblement radialement vers l'extérieur du collier et formant ainsi ledit rebord (13).

5. Collier selon l'une quelconque des revendications 1 à 4, **caractérisé en ce que** le crochet (14) est formé par un bossage pratiqué à la première extrémité de la bande (10A), bossage dont une partie du pourtour, préservée sensiblement dans le plan de la bande, forme ledit bord libre (14A, 14B, 14C) du crochet.

6. Collier selon l'une quelconque des revendications 1 à 5, **caractérisé en ce que** la deuxième extrémité (10B) de la bande présente une bavette (15) s'étendant, à l'état fermé du collier, sous la première extrémité (10A) de la bande.

7. Collier selon l'une quelconque des revendications 1 à 6, **caractérisé en ce que** la bande comporte des moyens de rigidification locale (15A, 15B, 15C).

## Patentansprüche

1. Klemmschelle, die auf der Grundlage eines eingerollten Bandes (10) ausgeführt ist, mit einem ersten Einhakmittel, das durch einen Haken (14) gebildet wird, der an der Schelle nach außen vorsteht und mit dem ein erstes Ende (10A) des Bandes versehen ist, während das zweite Ende (10B) des Bandes mit einem zweiten Einhakmittel versehen ist, wobei dieses zweite Einhakmittel ein Halteelement (12) umfasst, das an der Schelle nach außen vorsteht und zum Schließen der Schelle unter den Haken (14) einzugreifen vermag,
**dadurch gekennzeichnet, dass** der Haken (14) einen freien Rand (14A) aufweist, der sich annähernd entlang der Oberfläche des durch das eingerollte Band gebildeten Zylinders erstreckt, während das zweite Einhakmittel zudem einen vorstehenden Rand (13) umfasst, der an der Schelle radial nach außen vorstehend in der Nähe des Haltelements (12) ausgebildet ist, wobei der freie Rand (14A) des Hakens unter diesen vorstehenden Rand (13) einzugreifen vermag, während das Halteelement zum Schließen der Schelle unter diesen Haken eingreift.

2. Schelle nach Anspruch 1,
**dadurch gekennzeichnet, dass** der Haken (14) eine in axialer Richtung des durch das eingerollte Band gebildeten Zylinders gemessene Breite (L3) aufweist, die kleiner ist als die in derselben Richtung gemessene Breite (L2) des Bandes (10).

3. Schelle nach Anspruch 2,
**dadurch gekennzeichnet, dass** der dem zweiten Einhakmittel zugehörige vorstehende Rand (13) Seitenarme (13C, 13D) aufweist, die sich annähernd in Längsrichtung des Bandes erstrecken und zwischen die der Haken (14) bei geschlossener Stellung der Schelle einzugreifen vermag.

4. Schelle nach einem der Ansprüche 1 bis 3,
**dadurch gekennzeichnet, dass** das zweite Ende (10B) des Bandes (10) einen Ausschnitt (17) aufweist, der eine Zunge (12) stehen lässt, die das Halteelement bildet, wobei ein dieser Zunge gegenüberliegend angeordneter Randteil dieses Ausschnitts an der Schelle im wesentlichen radial nach außen gedrückt wird und auf diese Weise diesen vorstehenden Rand bildet (13).

5. Schelle nach einem Ansprüche 1 bis 4,
**dadurch gekennzeichnet, dass** der Haken (14) durch einen am ersten Ende des Bandes (10A) ausgeführten Höcker gebildet wird bei dem ein im wesentlichen in der Ebene des Bandes verbleibender Teil seines äußeren Umfangs diesen freien Rand (14A, 14B, 14C) des Hakens bildet.

6. Schelle nach einem der Ansprüche 1 bis 5,
**dadurch gekennzeichnet, dass** das zweite Ende (10B) des Bandes einen Ansatz (15) aufweist, der im geschlossenen Zustand der Schelle unter dem ersten Ende (10A) des Bandes verläuft.

7. Schelle nach einem der Ansprüche 1 bis 6,
**dadurch gekennzeichnet, dass** das Band Mittel zur örtlichen Versteifung (15A, 15B, 15C) umfasst.

## Claims

1. A clamping collar made from a rolled-up strip (10) and comprising first fastening means formed by a hook (14) projecting towards the outside of the collar and occupying a first end (10A) of the strip, and second fastening means occupying the second end (10B) of the strip, said second fastening means comprising a retaining element (12) which projects towards the outside of the collar and which is suitable for being engaged beneath the hook (14) to close the collar,
the collar being **characterised in that** the hook (14) presents a free edge (14A) extending substantially on the surface of a cylinder defined by the rolled-up strip, while the second fastening means further comprises a rim (13) projecting radially towards the outside of the collar and formed in the vicinity of the retaining element (12), the free edge (14A) of the hook being suitable for being engaged beneath the rim (13) while the retaining element is engaged beneath said hook in order to close the collar.

2. A collar according to claim 1, **characterised in that** the hook (14) is of a width (L3) measured in the axial direction of the cylinder formed by the rolled-up strip, which is less than the width (L2) of the strip (10) measured in the same direction.

3. A collar according to claim 2, **characterised in that** the rim (13) belonging to the second fastening means presents lateral branches (13C, 13D) extending substantially lengthwise relative to the strip, said hook (14) being suitable for being engaged between said branches when the collar is in the closed position.

4. A collar according to any one of claims 1 to 3, **characterised in that** the second end (10B) of the strip (10) presents a cut-out (17) leaving a tongue (12) which constitutes the retaining element, a portion of the edge of said cut-out facing said tongue being pushed substantially radially towards the outside of the collar, thereby forming said rim (13).

5. A collar according to any one of claims 1 to 4, **characterised in that** the hook (14) is formed by a projection formed at the first end of the strip (10A), which projection has a fraction of its outline preserved to lie substantially in the plane of the strip and form said free edge (14A, 14B, 14C) of the hook.

6. A collar according to any one of claims 1 to 5, **characterised in that** the second end (10B) of the strip presents a bib (15) extending beneath the first end (10A) of the strip when the collar is in the closed state.

7. A collar according to any one of claims 1 to 6, **characterised in that** the strip has local stiffening means (15A, 15B, 15C).
